# EUROPEAN PATENT APPLICATION

(11) **EP 1 953 406 A1**
(43) Date of publication of application: **06.08.2008**
(21) Application number: 08101077.9
(22) Date of filing: 29.01.2008
(51) Int. Cl.: F16D 55/36, F16D 65/12, F16D 66/02

(54) **Aircraft brake assembly having metal-backed carbon pressure plate**

(30) Priority: 02.02.2007 US 701396
(71) Applicant: Honeywell International Inc., Morristown, NJ 07962 (US)
(72) Inventor: Bingham, Douglas S., Gilbert AZ 85296 (US); Shamo, James M., Lakeville, IN 46536 (US)
(74) Representative: Buckley, Guy Julian

(57) **Abstract**

An aircraft brake assembly (10) includes a plurality of spaced carbon stators (14), one of the stators (14) being a carbon pressure plate (22), a plurality of carbon rotors (18) extending into spaces between the plurality of spaced carbon stators (14) and forming with the stators (14) a brake stack, at least one piston (20) mounted adjacent the brake stack for driving the carbon pressure plate (22) into contact with one of the plurality of carbon rotors (18), and a metal pressure plate (36) mounted between the carbon pressure plate (22) and the at least one piston (20). Also a method of braking an aircraft using such an assembly (10).

## Description

### FIELD OF THE INVENTION

The present invention is directed to an aircraft brake assembly having carbon brake disks, a carbon pressure plate, and at least one piston for applying pressure against the carbon pressure plate, and to a method of braking an aircraft having such a brake assembly, and more specifically toward an aircraft brake assembly having carbon brake disks, a carbon pressure plate, at least one piston for applying pressure against the carbon pressure plate and a metal pressure plate between the carbon pressure plate and the at least one piston, the metal pressure plate being configured to protect the carbon pressure plate and to engage a rotor if the carbon pressure plate fails, and to a method of braking an aircraft equipped with such a brake assembly.

### BACKGROUND OF THE INVENTION

Aircraft brake assemblies often include a brake stack made up of a number of stators mounted on a torque tube with spaces therebetween and a number of rotors mounted for rotation with an aircraft wheel that project into the spaces between the stators. One or more pistons, which may be electrically or hydraulically actuated, are mounted on a housing next to the brake stack and apply pressure against a first stator, sometime referred to as a pressure plate, to compress the stack of rotors and stators and slow the aircraft wheel. As used herein, the term "pressure plate" means a structure that can be driven by one or more pistons into contact with a moving rotor to frictionally engage the rotor, compress a disk stack and remain in contact with the rotor to bring an aircraft to a stop at least one time without being destroyed. Moreover, not "being destroyed" implies that the pressure plate lasts long enough to bring the aircraft to a safe stop, not necessarily that the pressure plate would have any remaining functionality after such a use. Steel rotors and stators have traditionally been used in brake stacks, but the use of carbon-carbon brake disks (which may be referred to herein as "carbon" brakes or disks) is becoming more common.

It is also known to attach a wear pin to the pressure plate. The wear pin extends away from the brake stack and moves with the pressure plate when pressure is applied by the pistons. As the rotors and stators wear, they become thinner, and it is necessary to extend the pistons further and further to compress the brake stack. The length of wear pin visible and/or extending past a reference point when the brakes are fully applied provides an indication of how far the brake disks have worn and when new rotors and/or stators are required.

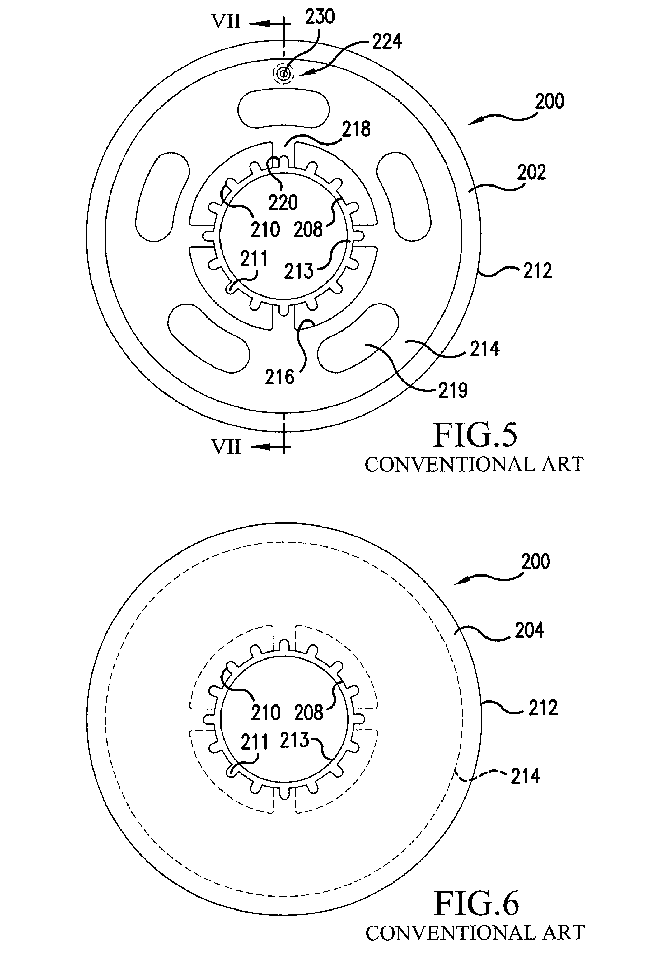

Pistons in a conventional brake system may be configured to apply pressure directly against the carbon pressure plate. Alternately, a force distribution ring may be provided between the pistons and the carbon pressure plate to more evenly distribute the force of the pistons along the surface of the pressure plate. A conventional carbon pressure plate 200 is illustrated in Figures 5-7 and includes a first side 202 that will face a piston (not shown) when in use and a second side 204 that will face a rotor (not shown). Pressure plate 200 includes an inner periphery 208 having a plurality of keyways 210 each of which will fit over a spline 211 on torque tube 213, and an outer periphery 212. A metal force distribution ring 214 is mounted on first side 202 of pressure plate 200 and includes an inner periphery 216 from which four tongues 218 project inwardly toward the center of the force distribution ring 214. Each of the tongues 218 includes a keyway 220 for engaging a spline 211 on torque tube 213. Pockets 219 are provided on force distribution ring 214 to reduce the weight thereof.

The inner diameter of force distribution ring 214 is greater than the inner diameter of the carbon pressure plate, and therefore only splines aligned with the keyways in the four tongues 218 engage a spline. The outer diameter of the force distribution ring 214 is smaller than the outer diameter of the pressure plate 200. A typical force distribution plate 214 is about 0.1 inches thick at pockets 219 and about 0.2 inches thick over the remainder of the ring.

A wear pin assembly 224 is attached to force distribution ring 214 and includes a mounting cup 226 having an opening 228 through which extends a wear pin 230. A retention pin 232 also helps secure the wear pin 230 to the force distribution ring 214.

When mounted on an aircraft wheel, conventional pressure plate 200 is exposed to water, deicing fluid, and, in general, the surrounding environment. It has been found that such exposure may degrade, through catalytic oxidation, for example, the pressure plate to the point that the wear pin becomes loose or even detaches from the pressure plate. More seriously, one failure mode of a conventional carbon pressure plate is the disintegration of the pressure plate during a braking operation. In this failure mode, the carbon pressure plate breaks and falls away from the wheel thereby allowing the pistons to directly engage the first moving rotor. This generally causes substantial damage to the aircraft brake assembly and may prevent an aircraft from being stopped. It has been found that deicing fluid and other environmental conditions to which the pressure plate is exposed accelerate the wearing of the pressure plate and make such a failure more likely. It would therefore be desirable to provide an aircraft brake assembly with a more robust pressure plate and a brake assembly that remains operable in the event of the destruction of the above described carbon pressure plate failure mode.

### SUMMARY OF THE INVENTION

These problems and others are addressed by embodiments of the present invention, a first aspect of which comprises an aircraft brake assembly that includes a plurality of spaced carbon stators, one stator comprising a pressure plate, and a plurality of carbon rotors extending into spaces between the spaced carbon stators and forming with the stators a brake stack. A plurality of pistons are mounted adjacent the brake stack for driving the carbon pressure plate into contact with one of the carbon rotors, and a metal pressure plate is mounted between the carbon pressure plate and the plurality of pistons.

Another aspect of the invention comprises a method of braking an aircraft having carbon rotors, carbon stators, a carbon pressure plate and a plurality of pistons for driving the carbon pressure plate into contact with a first one of the plurality of rotors. The method includes providing a metal pressure plate between the carbon pressure plate and the plurality of pistons, driving the plurality of pistons against the metal pressure plate to move the carbon pressure plate into contact with the first one of the plurality of rotors in a normal braking mode, and driving the plurality of pistons against the metal pressure plate to move the metal pressure plate against the first one of the plurality of rotors in an emergency mode of operation if the carbon pressure plate fails, while also maintaining function of the wear pin indicator.

Still another aspect of the invention comprises an aircraft brake assembly that includes a plurality of spaced carbon stators, one comprising a carbon pressure plate having a first side and a second side and a plurality of carbon rotors extending into spaces between the plurality of spaced carbon stators and forming with the stators a brake stack. A plurality of pistons are mounted adjacent the brake stack for driving the first side of the carbon pressure plate into contact with one of the plurality of carbon rotors, and a metal plate is in contact with the second side of the carbon pressure plate between the carbon pressure plate and the plurality of pistons that covers substantially all of the second side of the carbon pressure plate. The metal plate is configured such that liquids impinging against the metal plate are substantially prevented from contacting the second side of the carbon pressure plate.

### BRIEF DESCRIPTION OF THE DRAWINGS

These aspects and features of the invention and others will be more fully appreciated after a reading of the following detailed description together with the attached drawings wherein:

Fig. 1 is a sectional elevational view of a portion of an aircraft brake disk stack including a metal pressure plate according to an embodiment of the present invention;

Fig. 2 is a plan view of the metal pressure plate of Figure 1;

Fig. 3 is a plan view of a carbon pressure plate for use in the brake disk stack of Fig. 1;

Fig. 4 is a side elevational view of the metal pressure of Fig. 2 mounted on a torque tube adjacent the carbon pressure plate of Fig. 3 and including a wear pin connected to the metal pressure plate;

Fig. 5 is top plan view of a conventional carbon pressure plate having a force distribution ring;

Fig. 6 is a bottom plan view of the carbon pressure plate of Fig. 5; and

Fig. 7 is a sectional side elevational view of the carbon pressure plate of Fig. 5.

### DETAILED DESCRIPTION

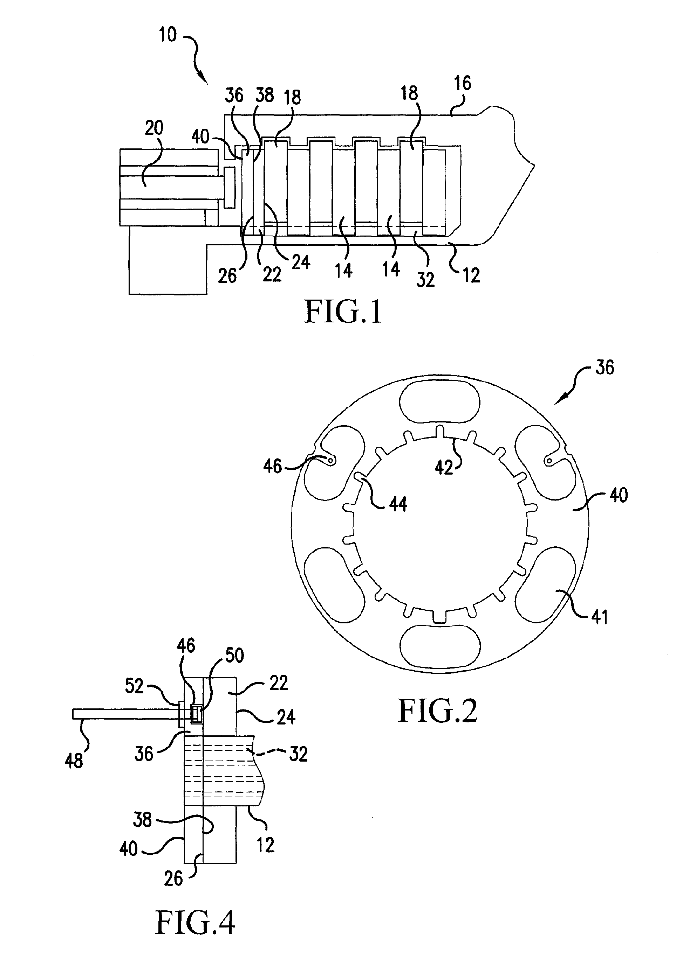

Referring now to the drawings, wherein the showings are for the purpose of illustrating preferred embodiments of the invention only and not for the purpose of limiting same, Figure 1 illustrates an aircraft brake assembly 10 comprising a torque tube 12 on which a plurality of stators 14 are mounted, separated by spaces. An aircraft wheel 16 surrounds the torque tube 12 and supports a plurality of rotors 18 which project into the spaces between the stators 14. The stators and rotors may be referred to together as a "stack" or a "brake stack." The stators 14 and rotors 18 are generally disk shaped; only the top half of each rotor and stator, viewed in section, is illustrated in Figure 1. One or more pistons 20 are used to compress the disk stack and drive the rotating rotors 18 into engagement with the stators to generate friction and slow the aircraft wheel.

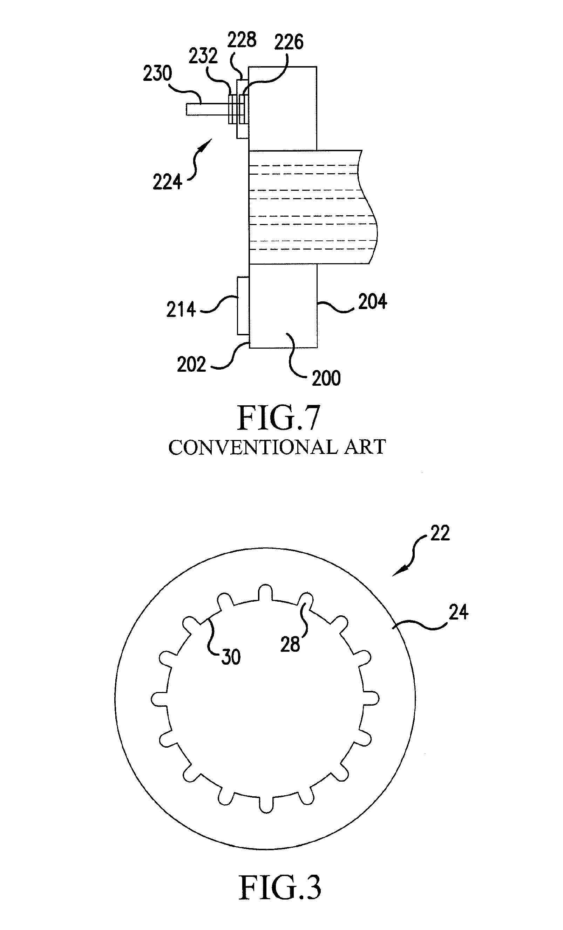

A carbon pressure plate 22, illustrated in Fig. 3 includes a first side 24 that will face one of the rotors 18 and a second side 26 that will face away from rotors 18.
Carbon pressure plate 22 includes a plurality of keyways 28 around an inner periphery 30 configured for receiving one of the splines 32 on torque tube 12.

A metal pressure plate 36 includes a first side 38 that will contact the carbon pressure plate 22 when in use and a second side 40 facing the pistons 20 that will be contacted by pistons 20 during use. Metal pressure plate 36 includes an inner periphery 42 having a plurality of keyways 44 for receiving splines 32 and securing metal pressure plate 36 against rotation relative to torque tube 12. The metal pressure plate 36 in this embodiment is formed from steel and includes weight reduction pockets 41. The metal pressure plate may be about 0.2 inches thick in the area of the pockets 41 and about 0.4 inches thick in the remaining areas.

Figure 4 illustrates carbon pressure plate 22 and metal pressure plate 36 mounted on a torque tube 12 with the second side 26 of carbon pressure plate 22 facing the first side 38 of metal pressure plate 36. The two pressure plates 22, 36 may be physically connected to each other, but in this embodiment are merely mounted adjacent to one another on the torque tube 12. The carbon pressure plate 22 and the metal pressure plate 36 each have a sufficient number of keyways 28, 44 to accommodate the number of splines 32 on the torque tube 12. Generally, the number of keyways 28 on the carbon pressure plate 22 will be equal to the number of keyways 44 on the metal pressure plate 36 and to the number of splines 32.

Metal pressure plate 36 includes a retainer 46 for receiving a wear pin 48 having a head 50 where the opening 46 has a depth greater than the thickness of the head 50 of the wear pin 48 so that the wear pin head 50 will remain spaced from the carbon pressure plate 22 during use. A retainer pin 52 helps secure the wear pin 48 in position.

As will be appreciated from Figure 4, the inner and outer diameters of carbon pressure plate 22 are approximately the same as the inner and outer diameters, respectively, of the metal pressure plate 36. In this manner, metal pressure plate 36 serves as a shield and, with wheel 16, substantially prevents water, deicers and other liquids in the environment from impinging against the second side 26 of the carbon pressure plate. In this manner, the breakdown of the carbon pressure plate 22 is delayed or substantially prevented. Moreover, metal pressure plate 36 reinforces carbon pressure plate 22 and thus allows for the use of a thinner pressure plate than was generally possible in conventional systems. Carbon rotors and stators are relatively expensive and cannot be used as rotors and stators once their thickness decreases below a given point. These worn disks, however, in this embodiment of the present invention, may serve as pressure plates for a further cost savings. Furthermore, metal pressure plate 36 absorbs a greater amount of heat than a similarly shaped carbon pressure plate and also functions to shield pistons 20 and other brake system elements from the extreme heat that is generated during braking operations.

Metal pressure plate 36, under normal operating conditions, is pressed against by pistons 20 when braking is commanded and conveys this force to carbon pressure plate 22 which presses against the first one of rotors 18 to compress the brake stack and slow the wheel. Beneficially, if the carbon pressure plate 22 fails, metal pressure plate 36 will be forced against the moving rotors instead of pistons 20 and should be able to withstand the temperatures and pressure of braking to keep brake system 10 functional long enough to bring an aircraft to a safe stop. This is partly due to the strength and mass of the metal pressure plate as well as to the fact that the metal pressure plate will generally be keyed to most or all splines 32 on the torque tube. Elements of the brake system 10, such as the metal pressure plate and the rotor 18 engaged by the metal pressure plate may require refurbishment after such an emergency braking operation, but pistons 20, the housing supporting the pistons 20 and the other rotors and stators should not be significantly affected.

The present invention has been described herein in terms of a preferred embodiment. Obvious modifications and additions to this embodiment will become apparent to those skilled in the relevant arts upon a reading of the foregoing description. It is intended that all such obvious modifications and additions comprise a part of the present invention to the extent they fall within the scope of the several claims appended hereto.

## Claims

1. An aircraft brake assembly (10) comprising:
a plurality of spaced carbon stators (14), one of said stators comprising a carbon pressure plate (22);
a plurality of carbon rotors (18) extending into spaces between the plurality of spaced carbon stators (14) and forming with said stators a brake stack;
a plurality of pistons (20) mounted adjacent said brake stack for driving said carbon pressure plate (22) into contact with one of said plurality of carbon rotors (18); and
a metal pressure plate (36) mounted between said carbon pressure plate (22) and said plurality of pistons (20).

2. The brake assembly (10) of claim 1 wherein said metal pressure plate (36) is configured such that liquids impinging against said metal pressure plate (36) are substantially prevented from contacting the carbon pressure plate (22).

3. The brake assembly (10) of claim 1 wherein said metal pressure plate (36) has a diameter substantially equal to a diameter of the carbon pressure plate (22).

4. The brake assembly (10) of claim 1 wherein said metal pressure plate (36) has an outer diameter substantially equal to an outer diameter of the carbon pressure plate (22) and an inner diameter substantially equal to the inner diameter of the carbon pressure plate (22).

5. The brake assembly (10) of claim 1 wherein said carbon pressure plate (22) has a first surface (26) opposite from said rotors (18) and said metal pressure plate (36) covers substantially all of said first surface (26).

6. The brake assembly (10) of claim 1 including a wear pin (48) mounted on said metal pressure plate (36).

7. The brake assembly (10) of claim 1 including a torque tube (12) having a number of splines (32), wherein said carbon pressure plate (22) and said metal pressure plate (36) each have the number of keyways (28, 44), one of said splines(32) passing thought a keyway (28, 44) in said carbon pressure plate (22) and said metal pressure plate (36).

8. The brake assembly (10) of claim 1 wherein said carbon pressure plate (22) is thinner than the other stators of said plurality of stators (14).

9. A method of braking an aircraft having carbon rotors, carbon stators, a carbon pressure plate and a plurality of pistons for driving the carbon pressure plate into contact with a first one of the plurality of rotors comprising:
providing a metal pressure plate between the carbon pressure plate and the plurality of pistons;
driving the plurality of pistons against the metal pressure plate to move the carbon pressure plate into contact with the first one of the plurality of rotors in a normal braking mode; and
driving the plurality of pistons against the metal pressure plate to move the metal pressure plate against the first one of the plurality of rotors in an emergency mode of operation if the carbon pressure plate fails.

10. The method of claim 9 including the additional step of holding said metal pressure plate against said one of said plurality of rotors until the aircraft comes to a complete stop.
